# EUROPEAN PATENT APPLICATION

(11) **EP 0 552 608 A1**
(43) Date of publication of application: **28.07.1993**
(21) Application number: 93100140.8
(22) Date of filing: 07.01.1993
(51) Int. Cl.: B29C 47/22, B29C 47/12

(54) **Parison head of blow molding machine**

(30) Priority: 22.01.1992 JP 6266/92
(71) Applicant: ISHIKAWAJIMA-HARIMA JUKOGYO KABUSHIKI KAISHA, Chiyoda-ku Tokyo-to (JP)
(72) Inventor: Urushibara, Teruyuki, Yokosuka-shi, Kanagawa-ken (JP); Kawabata, Kotaro, Yamato-shi, Kanagawa-ken (JP)
(74) Representative: LOUIS, PÖHLAU, LOHRENTZ & SEGETH

(57) **Abstract**

A slide plate (13) is radially slidably arranged on a lower end of at least one of nozzle forming members, i.e. a core (6) or a die (7). A filler piece (16A) is overlaid on a boundary between a front end corner of the slide plate and the nozzle forming member peripherally adjacent to each other. The filler piece is displaced depending upon a sliding movement of the slide plate.

## Description

### BACKGROUND OF THE INVENTION

The present invention relates to a parison head of a blow molding machine for blow-molding an extruded parison.

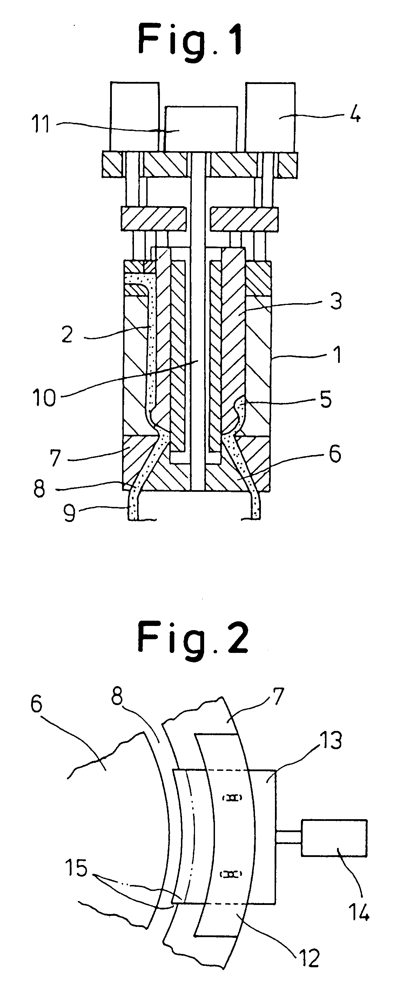

In a conventional parison head of a blow molding machine as shown in Fig. 1, resin plasticized by an extruder (not shown) is passed through a resin passage 2 in a cylindrical parison head main body 1 and is stored in a reservoir 5. A ring piston 3 in the resin passage 2 is moved downward by an injection cylinder 4 to inject the resin in the reservoir 5 as a parison 9 through an annular slit nozzle 8, which is formed between an annular die 7 or outer nozzle forming member mounted on a lower end of the parison head 1 and a core 6 or inner nozzle forming member arranged inside the die 7. Thickness of the parison 9 from the slit nozzle 8 between the core 6 and the die 7 is controlled by adjusting a gap of the slit nozzle 8 through vertical movement of a core support 10 integral with the core 6 by means of a parison control cylinder 11. Blow molding is performed by the air blown through a blow pin.

Such blow molding is advantageous in that a molded product with complicated shape such as a plastic fuel tank can be easily molded. However, the more complicated the shape of the product is, the more difficult it is to have uniform thickness.

Under such circumstances, a system has been proposed in Japanese Patent 2nd Publication No. 63-28766 in which a parison head has an arrangement similar to that of Fig. 1, a slide plate 13 being horizontally slidably arranged through a support block 12 on a lower end of the die 7 at a predetermined point or points in its peripheral direction as shown in Fig. 2. The gap of the slit nozzle 8 and thus the thickness of a parison 9 is locally controlled by radially sliding the plate 13 with respect to the slit nozzle 8 by means of a cylinder 14.

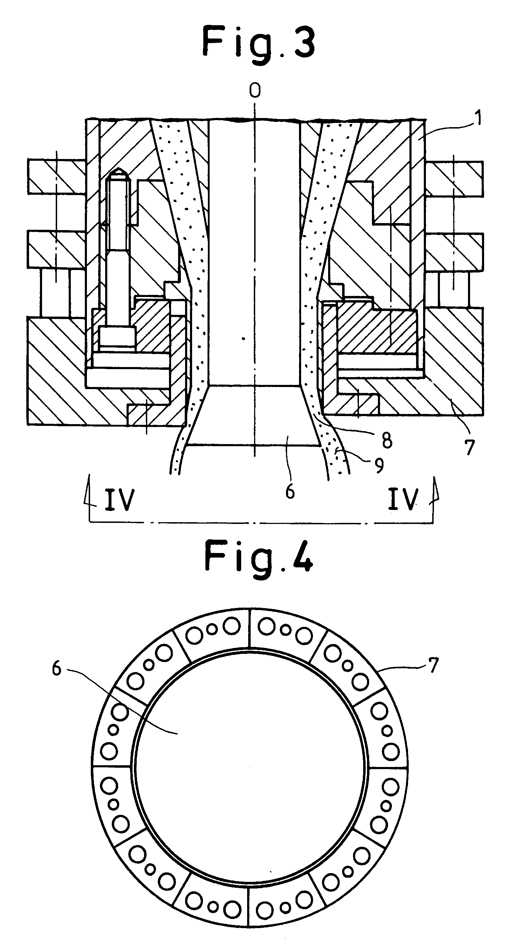

According to Japanese Patent 2nd Publication No. 58-44466, a die 7 peripherally divided into segments is arranged on a lower end of a parison head main body 1 as shown in Figs. 3 and 4 such that these segments may be separately and vertically moved. The gap of an annular slit nozzle 8 between the die 7 and a core 6 which is coaxial with the die 7 and which is movable along an axis 0 may be changed by separately moving the die segments so as to peripherally adjust the thickness of the parison 9.

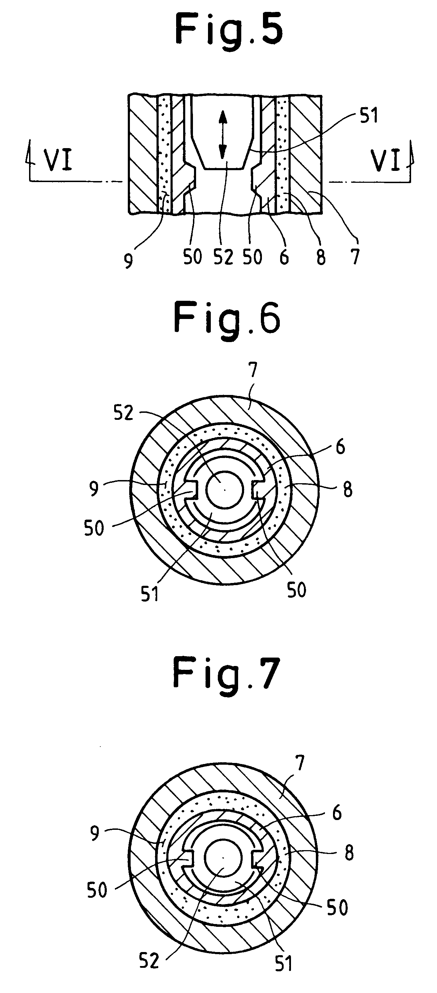

According to Japanese Patent 2nd Publication No. 3-25325, as shown in Figs. 5 to 7, a core 6 is a hollow elastic body arranged coaxially of a die 7 and is formed with projections 50 on its inner surface. A piston rod 52 tapered at 51 so as to engage with the projections 50 is inserted inside the core 6 such that it may be vertically moved. Vertical movement of the rod 52 causes the core 6 to be elastically deformed so that the gap of the slit nozzle 8 between the die 7 and the core 6 is changed to adjust the thickness of the parison 9 in the peripheral direction.

In the system of the above-mentioned Japanese Patent 2nd Publication No. 63-28766 as shown in Fig. 2, when the slide plate 13 is moved forward or backward respectively as shown by solid line or two-dot chain line to change the gap of the slit nozzle 8, steps 15 are produced on boundaries between the die 7 and front end corners of the slide plate 13. This causes corresponding steps on an outer surface of the parison 9, leading to malfunctions such as poor surface quality and decreased impact strength of a molded product.

In the parison head described in the Japanese Patent 2nd Publication No. 58-44466 as shown in Figs. 3 and 4, when the thickness of the parison 9 is changed by changing the vertical positions of the divided segments of the die 7, steps are produced on boundaries of the die segments adjacent to one another. As the result, corresponding steps are produced on an outer surface of the parison 9, which affects external appearance and quality of a blow-molded product.

In the parison head of the Japanese Patent 2nd Publication No. 3-25325 as shown in Figs. 5 to 7, the adjusted thickness of the parison 9 is always peripherally symmetrical and it is impossible to change the thickness locally. During the molding of the parison 9, the core 6 is exposed to high temperature (e.g., 200^{o}C or more) and high pressure (e.g., 30 to 150 kg/cm²). Since an elastic body resistant to and keeping enough service life under such severe conditions is hardly available, it is next to impossible to carry out blow molding according to such system.

It is therefore a major object of the present invention to provide a parison head of a blow molding machine in which thickness of a parison can be peripherally adjusted without impairing external appearance and quality of a blow molded product.

### BRIEF SUMMARY OF THE INVENTION

To overcome the above-mentioned problems encountered in the prior art, the present invention is directed to a parison head of a blow molding machine for injecting a parison from an annular slit nozzle between an outer nozzle forming member mounted on a lower end of a parison head main body and an inner nozzle forming member arranged inside said outer nozzle forming member, comprising a slide plate on a lower end of at least one of said nozzle forming members at a predetermined point in a peripheral direction, said slide plate being radially slidable and having a front end matching a shape of the slit nozzle, a filler piece overlaid on a boundary between a front end corner of the slide plate and the nozzle forming member peripherally adjacent to each other, said filler piece being displaceable depending upon a sliding movement of the slide plate.

The present invention is further directed to a parison head of a blow molding machine for injecting a parison from an annular slit nozzle between an outer nozzle forming member mounted on a lower end of a parison head main body and an inner nozzle forming member arranged inside said outer nozzle forming member, comprising said inner nozzle forming member peripherally divided into a plurality of core segments, each of said core segments being provided with a drive unit for axial movement thereof.

The present invention is further directed to a parison head of a blow molding machine for injecting a parison from an annular slit nozzle between an outer nozzle forming member mounted on a lower end of a parison head main body and an inner nozzle forming member arranged inside said outer nozzle forming member, comprising a radially extending groove at a predetermined peripheral position on a lower end of said inner nozzle forming member and a slide plate constituting a part of said inner nozzle forming member, said slide plate being engaged with said groove such that said slide plate is slidable by a drive unit.

In the case of the parison head with the filler piece displaceable depending upon the slide movement of the slide plate, forward or backward movement of the slide plate for controlling of the thickness of the parison from the slit nozzle causes the filler piece to be displaced so that steps produced near the front end corners of the slide plate are blocked two-dimensionally.

In the case of the parison head with the inner nozzle forming member divided into segments, downward or upward movement of core segments by the corresponding drive units upon injection of the parison from the slit nozzle causes the slit nozzle to be locally widened or narrowed, respectively, at corresponding points in the peripheral direction. Though local change in thickness of the parison in this way leads to steps produced on the boundaries of the core segments and corresponding steps on an inner surface of the parison, there is no influence on an outer surface of the parison. Thus, neither external appearance nor quality of a blow molded product are affected.

In the case of the parison head with the slide plate being engaged with the groove on the inner nozzle forming member for slide movement by the drive unit, to pull or push the slide plate toward or away from the axis of the inner nozzle forming member upon injection of the parison from the slide nozzle causes the slit nozzle to be locally widened or narrowed, respectively, at a corresponding point in the peripheral direction. Though local change in thickness of the parison in this way leads to steps produced on the boundaries between the inner nozzle forming member and the slide plate and corresponding steps on an inner surface of the parison, an outer surface of the parison remains smooth and there is no influence on quality of a blow molded product.

In the following, preferred embodiments of the present invention will be described in conjunction with drawings.

### BRIEF DESCRIPTION OF THE DRAWINGS

Fig. 1 is a schematic view of a conventional parison head of a blow molding machine;
Fig. 2 is a partial bottom view of another conventional parison head, showing a conventional parison thickness control mode;
Fig. 3 is a vertical sectional view of a further conventional parison head;
Fig. 4 is a view looking in the direction of arrows IV-IV in Fig. 3;
Fig. 5 is a vertical sectional view of a further conventional parison head;
Fig. 6 is a view taken along the line VI-VI in Fig. 5;
Fig. 7 is a cross-sectional view corresponding to Fig. 6, showing thickness adjustment;
Fig. 8 is a schematic bottom view of a first embodiment of a parison head of a blow molding machine according to the present invention;
Fig. 9 is an enlarged view taken along the line IX-IX in Fig. 8;
Figs. 10(A) and 10(B) show operating conditions where the slide plate is moved forward and backward, respectively;
Fig. 11 is a schematic bottom view of a second embodiment of the present invention;
Figs. 12(A) and 12(B) show operating conditions of the second embodiment of Fig. 11 where the slide plate is moved forward and backward, respectively;
Fig. 13 is a schematic bottom view of a third embodiment of the present invention;
Figs. 14(A) and 14(B) show operating conditions of the third embodiment of Fig. 13 where the slide plate is moved forward and backward, respectively;
Fig. 15 is a vertical sectional view of a fourth embodiment of the present invention;
Fig. 16 is a view looking in the direction of arrows XVI-XVI in Fig. 15;
Fig. 17 is a vertical sectional view of a fifth embodiment of the present invention; and
Fig. 18 is a view looking in the direction of arrows XVIII-XVIII in Fig. 17.

### DETAILED DESCRIPTION OF THE PREFERRED EMBODIMENTS

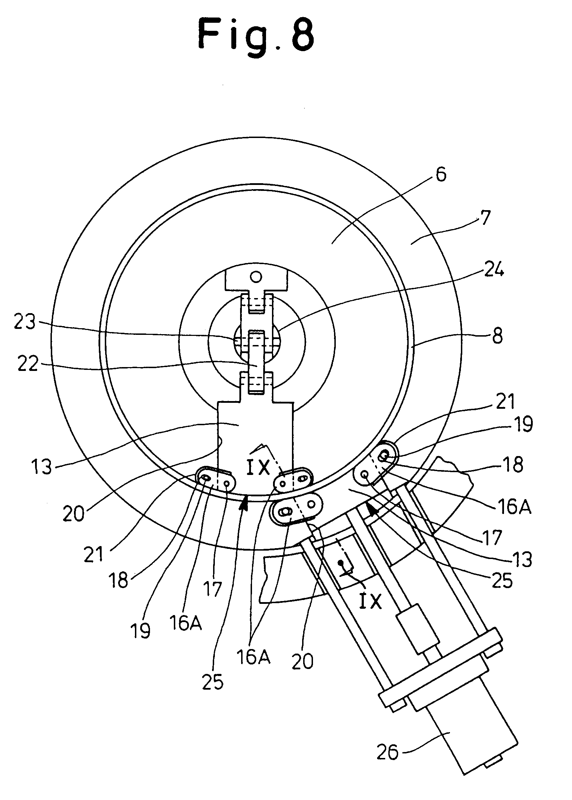

Figs. 8 to 10 show a first embodiment of a parison head of a blow molding machine according to the present invention which has an annular slit nozzle 8 for injecting a parison 9 between a die 7 or outer nozzle forming member mounted on a lower end of a parison head main body 1 and a core 6 or inner nozzle forming member arranged inside the die 7, just like the prior art shown in Fig. 1. A slide plate 13 with a front end curved to match the shape of the slit nozzle 8 is radially slidably arranged on a lower end of the core 6 at a predetermined point or points in a peripheral direction of the core 6. A link-like filler piece 16A is arranged on a boundary between the slide plate 13 and core 6 at their corners adjacent to each other and adjacent to the slit nozzle 8 to block the boundary at the corners. The filler piece 16A has one end connected to the slide plate 13 by a pin 17 and the other end connected to the core 6 by a pin 19 via a slot 18 extending along the peripheral direction. The slide plate 13 and core 6 are interconnected by the filler piece 16A to provide thickness control means 25.

The slide plate 13 is disposed in a recess 20 on the lower end of the core 6 and the filler piece 16A is disposed in a recess 21 extending both on the lower ends of the core 6 and plate 13 so that lower surfaces of the slide plate 13 and filler piece 16A are coplanar with the lower end surface of the core 6. The slide plate 13 has a rear end to which a flexed link 22 is pivoted at its one end. The flexed link 22 has an intermediate pin 23 connected to a lower end of an operating rod 24 which in turn extends along the axis of the core 6 so that upward or downward movement of the operating rod 24 is converted by the flexed link 22 to horizontal movement of the slide plate 13 in a radial direction.

The thickness control means 25 with an arrangement similar to the above is also disposed on a lower end of the die 7. The thickness control means 25 for the die 7 has a servo cylinder 26 for moving the slide plate 13 in the radial direction.

Although not shown in the drawings, holding plates for preventing the thickness control means 25 from falling are mounted on lower surfaces of the core 6 and die 7.

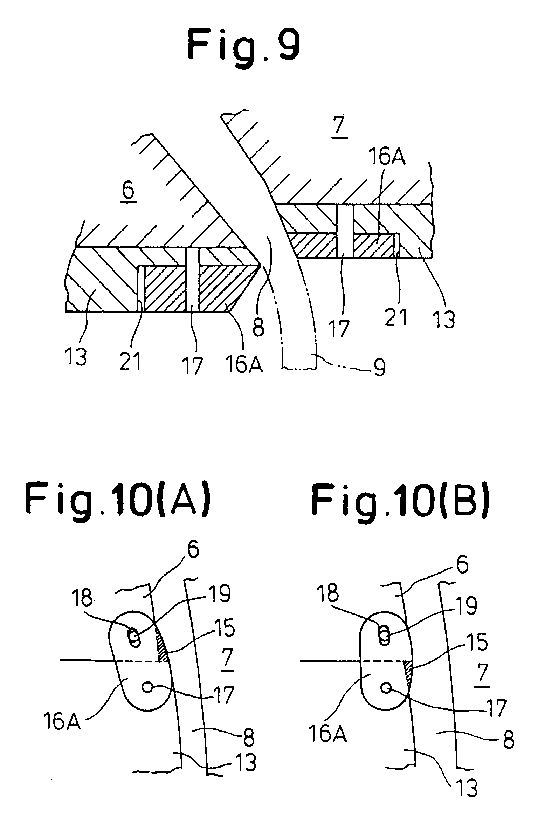

In controlling the thickness of the parison 9, when the thickness is to be partially reduced by adjusting the thickness control means 25 on the core 6, the slide plate 13 is moved toward the slit nozzle 8 to partially reduce the gap of the slit nozzle 8 as shown in Fig. 10(A). To project the slide plate 13 toward the slit nozzle 8 will produce a step 15 as shaded in Fig. 10(A) on the front end corner of the slide plate 13. Since the link-like filler piece 16A is mounted on the boundary between the core 6 and the front end corner of the slide plate 13 by pins 17 and 19 and the pin 19 is in a slot 18, the filler piece 16A is displaced depending upon the slide movement of the slide plate 13. Therefore, the step 15 is blocked two-dimensionally by the filler piece 16A at the lower end of the slit nozzle 8. Thus, a part of the gap of the slit nozzle 8 is reduced smoothly.

On the other hand, when the thickness of the parison 9 is to be partially thickened as shown in Fig. 10(B), the slide plate 13 is moved backward from the slit nozzle 8. In this case, a step 15 will be produced as shaded in Fig. 10(B) in front of the front end corner of the slide plate 13. Similar to the above, the step 15 is blocked by the filler piece 16A and thus a part of the gap of the slit nozzle 8 is widened smoothly.

Thickness control by the thickness control means 25 as described above can be performed on the die 7 in similar manner.

Thus, a step produced near the front end corner of the slide plate 13 can be blocked by the filler piece 16A, which is displaced depending upon the slide movement of the slide plate 13. Any step on the parison 9 can be prevented in this way and any decrease in product quality and impact strength can be avoided.

Though the description has been given on a case where the thickness control means 25 are disposed both on the core 6 and die 7, it is to be noted that the means 25 may be provided on either one of them. In a case where it is provided on the die 7, it may be applied on a 4-link type die.

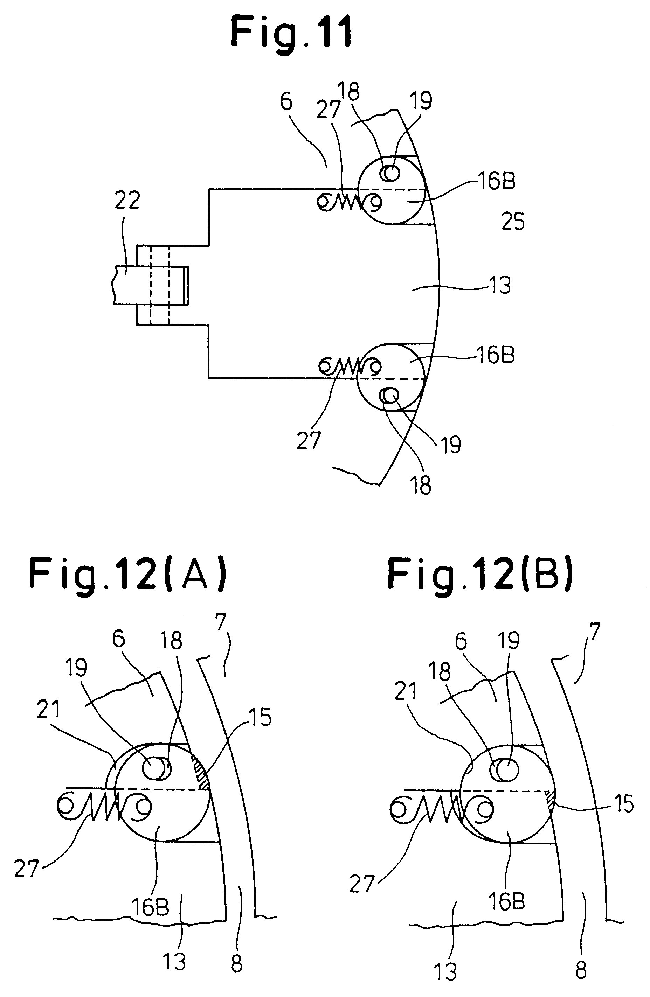

Next, a second embodiment of the invention as shown in Figs. 11 and 12 will be described. In an arrangement similar to the first embodiment mentioned above, a circular filler piece 16B is used instead of a link-like filler piece 16A. The filler piece 16B is mounted on the core 6 by the pin 19 via a slot 18 extending in parallel with the direction of movement of the slide plate 13. A spring 27 is interposed between the filler piece 16B and the slide plate 13 to urge the filler piece 16B away from the slit nozzle 8. The slot 18 and pin 19 are positioned such that, when a front end of the slide plate 13 aligns with an outer peripheral edge of the core 6, an outer periphery of the filler piece 16B will align with an outer peripheral edge of the core 6.

In this embodiment, when the slide plate 13 is moved forward as shown in Fig. 12(A), the filler piece 16B is also integrally moved forward so that the step 15 produced near the front end corner of the slide plate 13 is blocked by the filler piece 16B. When the slide plate 13 is moved backward as shown in Fig. 12(B), a wall defining the slot 18 on the filler piece 16B will abut on the pin 19 serving as a stopper to restrict the backward movement of the filler piece 16B, so that the step 15 in front of the front end corner of the slide plate 13 is blocked by the filler piece 16B. Although not shown in the drawings, it is needless to say that the thickness control means 25 using the above filler piece 16B may be provided on the die 7.

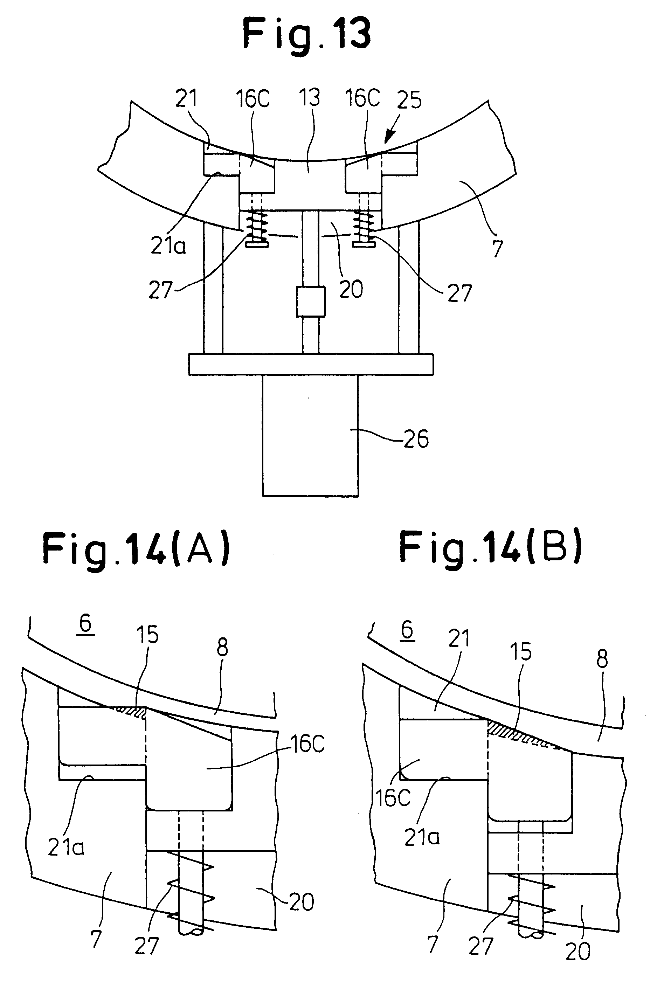

Next, a third embodiment of the present invention as shown in Figs. 13 and 14 will be described which is similarly to the second embodiment shown in Fig. 11 in that the filler piece is moved forward when the slide plate 13 is moved forward. Used in the third embodiment is a filler piece 16C having its front end protruded with an angle. A back wall surface 21a of a recess 21 on the die 7 serves as a stopper to restrict backward movement of the filler piece 16C.

Mode of operation in this embodiment is as shown in Figs. 14(A) and 14(B) and effects similar to those in Figs. 12(A) and 12(B) can be obtained. The thickness control means 25 using the filler piece 16C may also be used on the core 6 if the front end of the filler piece 16C is bent in recessed form.

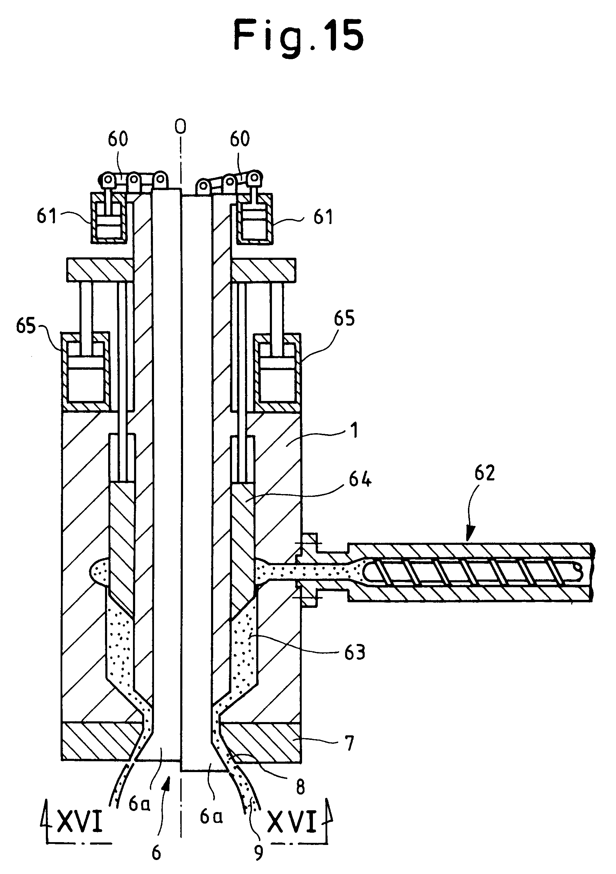

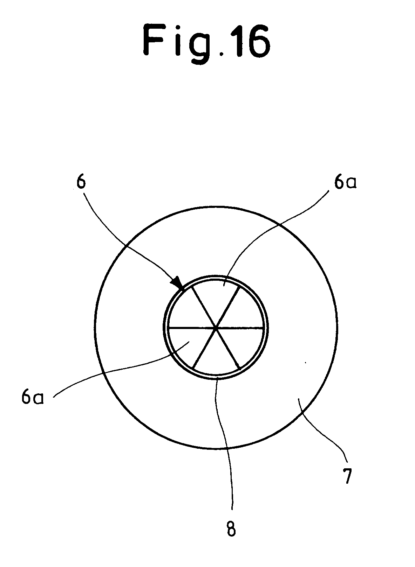

Figs. 15 and 16 show a fourth embodiment of the present invention in which a core 6 is in an axis 0 of a die 7 mounted on a lower end of a parison head main body 1 and is movable along the axis 0, an annular slit nozzle 8 for extruding the parison 9 being defined by the core 6 and die 7. The core 6 is peripherally divided into a plurality of (six in the drawings) core segments 6a. Each of the core segments 6a is connected at its upper end through a link 60 to a cylinder or the like drive unit 61 for movement of the core segment 6a along the axis 0, said link 60 being pivotally mounted on an upper end of the main body 1.

In the figure, reference numeral 62 represents an extruder for supplying molten resin into a passage 63 in the main body 1; 64, a ring piston for pushing the supplied molten resin in the passage 63 out of the slit nozzle 8; and 65, a cylinder or the like drive unit for driving the ring piston 64 vertically.

In the embodiment shown in Figs. 15 and 16, when molten resin is supplied from the extruder 62 into the passage 63 and the ring piston 64 is moved downward to inject a parison 9 from the slit nozzle 8, the core segment 6a at a predetermined peripheral position may be moved up or down through the link 60 by the drive unit 61 to narrow or widen the slit nozzle 8 at the corresponding peripheral position, thereby decreasing or increasing thickness of the parison 9 at the corresponding peripheral position, respectively.

Such movement of the core segment for local change of thickness of the parison 9 will produce steps on boundaries of the core segments 6a, leading to produce corresponding steps on an inner surface of the parison 9. However, there is no influence on an outer surface of the parison 9. Thus, both external appearance and quality of a blow molded product are not adversely affected.

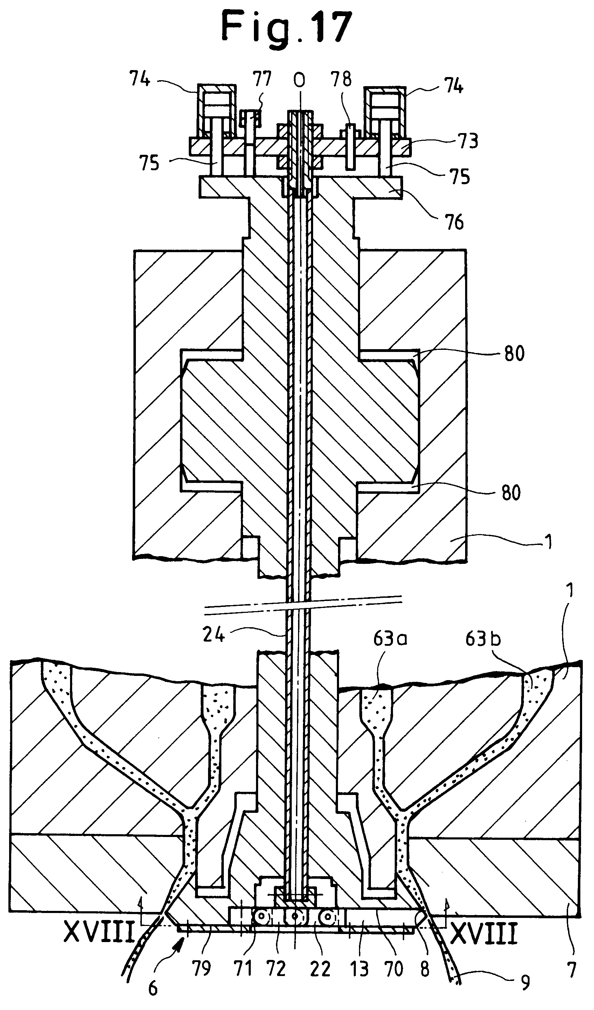

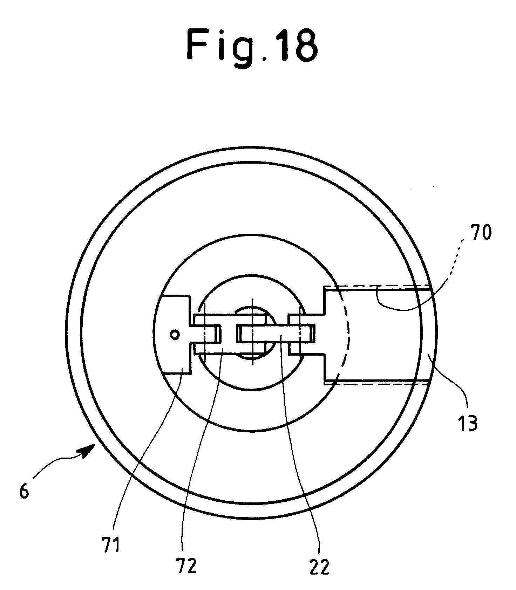

Further, Figs. 17 and 18 show a fifth embodiment of the present invention in which a radially extending groove 70 is formed at a predetermined peripheral position of a lower end of a core 6. In this groove 70, a slide plate 13 forming a part of the core 6 is slidably engaged. An operating rod 24 expending along an axis 0 of the core 6 has a lower end connected through a flexed link 22 to an inner end of the slide plate 13. A bracket 71 diametrically opposite to the slide plate 13 with respect to the core 6 is connected through an auxiliary link 72 to the lower end of the operating rod 24. Further, a base plate 73 is fixed on an upper end of the operating rod 24 and a cylinder or the like drive unit 74 is mounted on the base plate 73. The forward end of a rod 75 of the drive unit 74 is passed through the base plate 73 and is mounted on a flange 76.

In the figure, reference numerals 77 and 78 denote stoppers for restricting upward and downward strokes of the operating rod 24; and 79, a heater mounted on the lower end surface of the core 6. In the case of the parison head of Fig. 17, upward and downward movement of the core 6 itself is performed by supplying or discharging working fluid to and from a cylinder chamber 80 inside the main body 1. Two passages 63a and 63b are formed in the main body 1 so that different kinds of molten resins may be brought together for injection molding of two layers of parison 9.

During injection molding of the parison 9, upward movement of the operating rod 24 by the drive unit 74 causes ends of the flexed link 22 and auxiliary link 72 closer to the axis of the core 6 to be moved up so that the slide plate 13 is pulled toward the core 6 along the groove 70. Thus, gap of the slit nozzle 8 at a corresponding position in the peripheral direction is increased and thickness of the parison 9 at a corresponding position in the peripheral direction is locally thickened.

In the embodiment of Figs. 17 and 18, the slide plate 13 may be positioned such that with the flexed link 22 and auxiliary link 72 being in horizontal positions, the slide plate 13 is protruded in advance of the outer periphery of the core 6. In such a case, the slide plate 13 may be protruded in advance of, aligned with or pulled into the outer periphery of the core 6 depending upon a degree of upward movement of the operating rod 24. With the slide plate 13 being protruded in advance of the outer periphery of the core 6, thickness of the parison 6 can be locally reduced.

Such local change of thickness of the parison 9 in the embodiment of Figs. 17 and 18 also causes steps to be produced on boundaries between the core 6 and slide plate 13, resulting in corresponding steps on an inner surface of the parison 9. However, an outer surface of the parison 9 remains smooth and quality of a blow molded product is not affected.

It is to be noted that a parison head of a blow molding machine according to the present invention is not limited to the above-mentioned embodiments and that various modifications may be made without deviating from the true spirit of the present invention.

As described above, in a parison head of a blow molding machine according to the present invention, a slide plate is arranged radially slidably on a lower end of a nozzle forming member and a filler piece is overlaid on a boundary between a front end of the slide plate and the nozzle forming member peripherally adjacent to each other so as to be displaced depending upon slide movement of the slide plate, so that a step produced near the front end corner of the slide plate upon forward or backward movement of the filler piece for adjustment of the gap of the slit nozzle can be blocked two-dimensionally by the displacement of the filler piece. Thus, it is possible to control the thickness of the parison with high accuracy and to attain uniform thickness of a product with complicated shape. As the result, the conventional problems such as poor product quality and decreased impact strength of the product can be overcome.

When thickness of a parison is adjusted by an inner nozzle forming member peripherally divided into segments or by an inner nozzle forming member with a groove to which a slide plate adapted to be radially slided by a drive unit is engaged, steps on an outer surface of a parison is prevented from being produced and thickness of the parison in the peripheral direction can be adjusted without adverse effect on quality of a blow molded product.

## Claims

1. A parison head of a blow molding machine for injecting a parison from an annular slit nozzle between an outer nozzle forming member mounted on a lower end of a parison head main body and an inner nozzle forming member arranged inside said outer nozzle forming member, comprising a slide plate on a lower end of at least one of said nozzle forming members at a predetermined point in a peripheral direction, said slide plate being radially slidable and having a front end matching a shape of the slit nozzle, a filler piece overlaid on a boundary between a front end corner of the slide plate and the nozzle forming member peripherally adjacent to each other, said filler piece being displaceable depending upon a sliding movement of the slide plate.

2. A parison head of a blow molding machine for injecting a parison from an annular slit nozzle between an outer nozzle forming member mounted on a lower end of a parison head main body and an inner nozzle forming member arranged inside said outer nozzle forming member, comprising said inner nozzle forming member peripherally divided into a plurality of core segments, each of said core segments being provided with a drive unit for axial movement thereof.

3. A parison head of a blow molding machine for injecting a parison from an annular slit nozzle between an outer nozzle forming member mounted on a lower end of a parison head main body and an inner nozzle forming member arranged inside said outer nozzle forming member, comprising a radially extending groove at a predetermined peripheral position on a lower end of said inner nozzle forming member and a slide plate constituting a part of said inner nozzle forming member, said slide plate being engaged with said groove such that said slide plate is slidable by a drive unit.
